# EUROPEAN PATENT APPLICATION

(11) **EP 4 093 080 A1**
(43) Date of publication of application: **23.11.2022**
(21) Application number: 21767171.8
(22) Date of filing: 09.03.2021
(51) Int. Cl.: H04W 24/00, H04W 24/08, H04W 16/26, H04W 16/28

(54) **MEASUREMENT CONFIGURATION METHOD, TERMINAL AND NETWORK SIDE DEVICE**

(30) Priority: 09.03.2020 CN 202010158805
(71) Applicant: Vivo Mobile Communication Co., Ltd., Dongguan, Guangdong 523863 (CN)
(72) Inventor: YANG, Kun, Dongguan, Guangdong 523863 (CN); JIANG, Dajie, Dongguan, Guangdong 523863 (CN)
(74) Representative: Murgitroyd & Company
(86) International application number: PCT/CN2021/079652
(87) International publication number: WO 2021/180053

(57) **Abstract**

The present invention relates to the field of communications technologies and provides a measurement configuration method, a terminal, and a network side device. The measurement configuration method is applied to a terminal and includes: receiving indication information transmitted by a first network side device, where the indication information is used to indicate a changed signal in a target cell; and performing measurement and/or synchronization based on the changed signal, where the target cell includes a serving cell and/or a neighboring cell, and the changed signal includes at least one of a reference signal and a synchronization signal.

## Description

### CROSS-REFERENCE TO RELATED APPLICATION

This application claims priority to Chinese Patent Application No. 202010158805.4 filed in China on March 9, 2020, which is incorporated herein by reference in its entirety.

### TECHNICAL FIELD

The present invention relates to the field of communications technologies, and in particular, to a measurement configuration method, a terminal, and a network side device.

### BACKGROUND

When there appears a hot-spot user having a high-level requirement on a service data rate in a cell and beams currently configured for a serving cell cannot satisfy the service requirement, the cell will increase available beams (for example, activate an extra secondary node/panel (panel)/large intelligent surface (Large Intelligent Surface, LIS) or reconfigurable intelligent surface (Reconfigurable Intelligent Surface, RIS) of intelligent hardware), causing a change of beam set resources configured for the cell. Consequently, there is a problem that beam measurement needs to be re-configured and original beam measurement data and a terminal configuration cannot further be used.

### SUMMARY

Embodiments of the present invention provide a measurement configuration method, a terminal, and a network side device, to solve a problem that when there is an instant change of available beams in a cell, original beam measurement data and a terminal configuration cannot be used again due to a change of beam set resources configured for the cell, while beam measurement re-configuration will take a long time, and efficiency of terminal measurement is affected.

To resolve the technical problem, the following solutions are proposed in the embodiments of the present invention:

According to a first aspect, the embodiments of the present invention provide a measurement configuration method, applied to a terminal. The method includes:
receiving indication information transmitted by a first network side device, where the indication information is used to indicate a changed signal in a target cell; and
performing measurement and/or synchronization based on the changed signal, where
the target cell includes a serving cell and/or a neighboring cell, and the changed signal includes at least one of a reference signal and a synchronization signal.

According to a second aspect, the embodiments of the present invention further provide a measurement configuration method, applied to a first network side device. The method includes:
transmitting indication information to a terminal, where the indication information is used to indicate a changed signal in a target cell, where
the target cell includes a serving cell and/or a neighboring cell, and the changed signal includes at least one of a reference signal and a synchronization signal.

According to a third aspect, an embodiment of the present invention further provides a terminal, including:
a first receiving module, configured to receive indication information transmitted by a first network side device, where the indication information is used to indicate a changed signal in a target cell; and
a performing module, configured to perform measurement and/or synchronization based on the changed signal, where
the target cell includes a serving cell and/or a neighboring cell, and the changed signal includes at least one of a reference signal and a synchronization signal.

According to a fourth aspect, the embodiments of the present invention further provide a terminal, including a memory, a processor, and a computer program stored in the memory and executable on the processor, where when the computer program is executed by the processor, steps of the measurement configuration method described above are implemented.

According to a fifth aspect, the embodiments of the present invention further provide a network side device. The network side device is a first network side device, and includes:
a transmitting module, configured to transmit indication information to a terminal, where the indication information is used to indicate a changed signal in a target cell, where
the target cell includes a serving cell and/or a neighboring cell, and the changed signal includes at least one of a reference signal and a synchronization signal.

According to a sixth aspect, the embodiments of the present invention further provide a network side device, The network side device is a first network side device, and includes a memory, a processor, and a computer program stored in the memory and executable on the processor, where when the computer program is executed by the processor, steps of the measurement configuration method described above are implemented.

According to a seventh aspect, the embodiments of the present invention further provide a computer-readable storage medium. The computer-readable storage medium stores a computer program, and the computer program is executed by a processor to perform steps of the measurement configuration method described above.

Beneficial effects of the present invention are as follows:
According to the foregoing solutions, a reference signal and/or synchronization signal after a signal change in the target cell are/is notified to the terminal, so that the terminal can perform a subsequent operation based on the changed signal, and there is no need to re-configure a beam that is to be measured when a beam is changed, thereby improving efficiency of terminal measurement.

### BRIEF DESCRIPTION OF DRAWINGS

FIG. 1 is a schematic diagram of coverage enhancement of an LIS-based hot-spot service;
FIG. 2 is a first schematic flowchart of a measurement configuration method according to an embodiment of the present invention;
FIG. 3 is a second schematic flowchart of a measurement configuration method according to an embodiment of the present invention;
FIG. 4 is a schematic diagram of a module of a terminal according to an embodiment of the present invention;
FIG. 5 is a structural block diagram of a terminal according to an embodiment of the present invention;
FIG. 6 is a schematic diagram of a module of a network side device according to an embodiment of the present invention; and
FIG. 7 is a structural block diagram of a network side device according to an embodiment of the present invention.

### DESCRIPTION OF EMBODIMENTS

To make the objects, technical solutions, and advantages of the present invention clearer, the following describes the present invention in detail in conjunction with the accompanying drawings and specific embodiments.

It should be noted that because one beam is associated with at least one signal, that is, when a beam is changed, it means that a signal transmitted over the beam is changed, and therefore, a change of a beam and a change of a signal that are mentioned in the present invention have the same meaning.

Some related concepts in the embodiments of the present invention are first described below.

Wireless services in the future will include data services that require very high data traffic (for example, augmented reality (Augmented Reality, AR)/virtual reality (Virtual Reality, VR) and high-definition video) or services that has high requirements on capacity of wireless channels. For ease of description, services with the high requirements are referred to as hot-spot services, and users of these services are referred to as hot-spot users. To satisfy a high-level requirement of a hot-spot user, one promising solution is to dynamically increase available beams that reach the hot-spot user, where a serving cell dynamically activate a secondary device (for example, a panel (panel) or a large intelligent surface (Large Intelligent Surface, LIS)), so as to increase available beams for the hot-spot user, thereby satisfying high-level requirement of a hot-spot service.

LIS is a recently emerged device including a number of periodically arranged man-made material units. LIS can change electric and magnetic properties of the surfaces dynamically/semi-statically to affect reflection/refraction of electromagnetic waves that are incident upon LIS. LIS can control reflected waves/refracted waves of electromagnetic waves to implement functions such as beam scanning/beam forming.

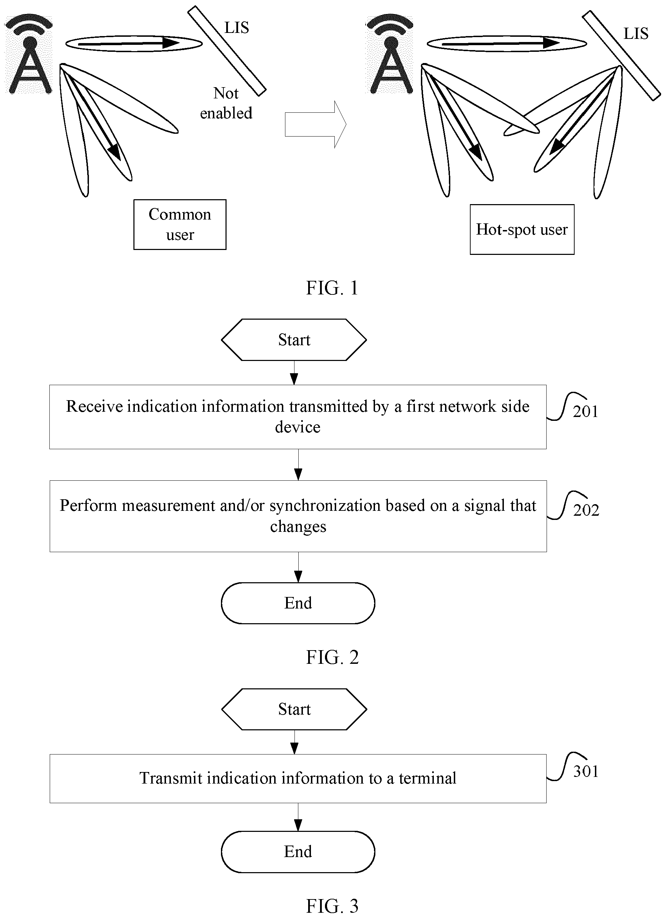

Coverage of an LIS-based hot-spot service is enhanced, and FIG. 1 is a schematic topology diagram of LIS-based coverage enhancement. When there is no hot-spot user in a cell, an LIS node may be in an off state, and a base station uses beams transmitted from the base station to serve users in the serving cell. When there is a hot-spot service, the base station cannot satisfy the high-level requirement of the hot-spot service by using the beams of the base station, so that the LIS node is activated by the base station, and one specific beam of the base station is directed to the LIS node. The LIS node reflects an incident signal from the base station according to a specific rule, and then there are different reflected beams for reflected signals. The hot-spot user receives the beams transmitted from the base station and/or the reflected beams from the LIS node to serve the purpose of hot-spot coverage.

Based on user distribution and service traffic in a cell, a network device needs to adjust a quantity of beams that are to be measured in the cell, to ensure user coverage quality and control measurement complexity and energy consumption. In an existing protocol, measurement and selection of a beam in a fixed beam set are described in a beam management procedure. For a beam set having a dynamic increase or change, all parameters for beam detection need to be re-configured according to the original procedure, leading to low configuration efficiency.

For example, a synchronization signal/PBCH block (Synchronization Signal/PBCH block, SS/PBCH Block) may be used for radio link monitoring (Radio link monitoring, RLM) measurement on bands in FR2 and can support a maximum of eight beams to be measured. If the base station uses a new secondary device, there will be a larger quantity of candidate beams that may exceed an upper quantity limit of beams to be measured. When the secondary device is enabled, a set of beams for user measurement may have a change. The network device needs to replace several beams in a set of candidate beams with beams from the secondary device.

For another example, in a radio resource management (Radio Resource Management, RRM) procedure, a terminal needs to obtain a status of an SSB beam of a neighboring cell to perform RRM measurement. For SSB RRM measurement results, it should be ensured that measurement results with a same SSB index are combined, and the index indicates a beam quality reference signal received power (Reference Signal Received Power, RSRP) of the SSB beam. There is the same requirement in measurement of synchronization signal reference signal received quality (Synchronization Signal Reference Signal Received Quality, SS-RSRQ) and a synchronization signal signal-to-interference -plus-noise ratio (Synchronization Signal Signal to Interference-plus-Noise Ratio, SS-SINR). A system performs layer 1 (Layer 1, L1)/layer 3 (Layer 3, L3) filtering based on results of a plurality of times of SSB measurement to determine quality of the neighboring cell. If an SSB beam configuration of the neighboring cell is changed, filtering of an RRM measurement result cannot indicate SSB quality of the neighboring cell.

The present invention provides a measurement configuration method, a terminal, and a network side device, to solve a problem that when there is an instant change of available beams in a cell, original beam measurement data and a terminal configuration cannot be used again due to a change of beam set resources configured for the cell, while beam measurement re-configuration will take a long time, and efficiency of terminal measurement is affected.

As shown in FIG. 2, an embodiment of the present invention provides a measurement configuration method, applied to a terminal. The method includes:
Step 201: receiving indication information transmitted by a first network side device.

It should be noted that the indication information is used to indicate a changed signal in a target cell.

Step 202: performing measurement and/or synchronization based on the changed signal.

The target cell includes a serving cell and/or a neighboring cell, and the changed signal includes at least one of a reference signal and a synchronization signal.

In other words, when a signal in the serving cell and/or the neighboring cell is changed, the terminal performs a subsequent operation based on a changed signal, and there is no need to re-configure a signal.

It should be noted herein that the performing measurement based on the changed signal mentioned in this embodiment of the present invention mainly means that a changed reference signal or a changed synchronization signal block is used for channel measurement; and the performing synchronization based on the changed signal mainly means that a changed synchronization signal is used for synchronization. It should further be noted that the terminal may further perform time-frequency tracking or neighboring cell measurement based on the changed synchronization signal.

After the terminal performs measurement based on the changed reference signal, the terminal further needs to report a measurement result.

Further, the indication information includes a first association relationship between a first signal set and a second signal set that are of the target cell.

The first signal set is a set of reference signals and/or synchronization signals after a change in the target cell, and the second signal set is a set of reference signals and/or synchronization signals before the change in the target cell.

Specifically, a signal in the first signal set includes a signal for channel measurement after a signal change in the target cell, and a signal in the second signal set includes a signal for channel measurement before a signal change in the target cell.

It should be noted that, because one beam corresponds to at least one reference signal or synchronization signal, that is, beam signal quality is determined by measuring signal quality of a corresponding reference signal, in the embodiments of the present invention, the first signal set may also be referred to as a first beam set, and the second signal set may also be referred to as a second signal set.

It should be noted that the serving cell is a serving cell of the terminal, and the neighboring cell is a cell that is other than the serving cell of the terminal and whose reference signal can be detected by the terminal.

It should further be noted that the first network side device may transmit the indication information through system information or a paging (paging) message. Specifically, the system information may be master information block (Master Information Block, MIB), system information block 1 (System Information Block 1, SIB 1), or the like.

It should be noted that the synchronization signal includes a synchronization signal block; and the reference signal includes at least one of channel state information-reference signal (Channel State Information-Reference Signal, CSI-RS), tracking reference signal (Tracking Reference Signal, TRS), and demodulation reference signal (Demodulation Reference Signal, DMRS).

Specifically, the first association relationship includes at least one of the following:

A11: First indication information of the target cell, where the first indication information indicates a first signal in the first signal set, and the first signal corresponds to a signal that exists after the target cell is changed and does not exist before the target cell is changed.

It should be noted that the first indication information indicates a new signal.

Specifically, to make clear specific information about the new signal, the first indication information may include at least one of the following:
A111: a transmission period of the first signal;
A112: a code division multiplexing (Code Division Multiplexing, CDM) mode of the first signal;
A113: a frequency domain resource for the first signal;
A114: a time domain resource for the first signal; and
A115: a configuration parameter of a message for reporting a channel measurement result of the first signal.

It should be noted that the configuration parameter may mean a reporting resource, a reporting periodicity, a reporting moment, and the like of a channel measurement result reporting message.

A12: Second indication information of the target cell, where the second indication information indicates a second signal in the second signal set, and the second signal corresponds to a signal that exists before the target cell is changed and does not exist after the target cell is changed.

It should be noted that the second indication information indicates a reduced signal (that is, a signal that is not to be transmitted). In this case, to reduce signaling overheads of the second indication information, the second indication information may only indicate identity information, for example, a signal index (index), of the reduced signal.

A13: Third indication information of the target cell, where the third indication information indicates a third signal in the first signal set and a fourth signal in the second signal set, and the third signal and the fourth signal correspond to signals that exist before and after the target cell is changed.

It should be noted that the signals that exist before and after the target cell is changed are signals with a space-energy distribution that stays unchanged for signal transmission. Specifically, the third indication information indicates a quasi-colocation (Quasi co-location, QCL) relationship between the fourth signal and the third signal. For example, the third indication information may indicate identity information of a signal that remains unchanged before a change and identity information, for example, a signal index, of the signal after the change. For example, the third indication information may indicate whether a time and frequency domain resource parameter of a synchronization signal or reference signal corresponding to the signal that remains unchanged has changed, or may indicate a configuration of the time and frequency domain resource parameter of the synchronization signal or reference signal corresponding to the signal that remains unchanged.

Further, to ensure that the terminal performs signal detection accurately, after the receiving indication information transmitted by a first network side device, the method according to this embodiment of the present invention further includes one of the following:
B11: determining, based on an indication of a signal change time in the indication information, a time when a signal is changed.

It should be noted that, in this case, the indication of the signal change time is carried in the indication information transmitted by the first network side device, and the indication is used by the terminal to determine the time when the signal is changed. After the terminal receives the indication information, the time when the signal is changed can be determined based on the indication carried in the indication information.

B12: determining, based on a first preset parameter, that the time when a signal is changed is after a first preset quantity of radio frames, subframes, or slots after the indication information is received.

It should be noted that, in this manner, the terminal mainly determines, based on the pre-defined parameter in a protocol, that the time when the signal is changed is after several radio frames, subframes, or slots after the indication information is received. For example, in a case in which the pre-defined parameter in a protocol is two radio frames (that is, the first preset parameter is two radio frames), the terminal determines that the time when the signal is changed is after two radio frames after the indication information is received.

B13: determining, based on a second preset parameter, that the time when a signal is changed is a synchronization signal block period after a second preset quantity.

It should be noted that, in this manner, the terminal mainly determines, based on the pre-defined parameter in a protocol, that the time when the signal is changed is after an SSB periodicity or a few SSB periodicities after the indication information is received. For example, in a case in which the pre-defined parameter in a protocol is one radio frame (that is, the second preset parameter is one radio frame), the terminal determines that the time when the signal is changed is after the SSB periodicity after the indication information is received.

Specifically, after step 201, the method according to this embodiment of the present invention further includes:
configuring, based on the first association relationship, a configuration parameter for signal measurement and status information for signal measurement that are associated with a first target signal to a second target signal, where
it should be noted that the first target signal is a signal in the second signal set, and the second target signal is a signal in the first signal set.

To be specific, in this case, after a signal change, there is a signal that remains unchanged. In other words, the first target signal and the second target signal correspond to signals that exist before and after a change. In this case, the terminal configures a configuration parameter and status information of a signal before a signal change to the signal that remains unchanged after the signal change. Specifically, the configuration parameter may be a layer 1 filter (L1 filter) parameter and a configuration of a synchronization signal block-based radio resource management measurement timing configuration SMTC window periodicity; and the status information may be an L1 filter result.

It should further be noted that, if a signal used by the terminal for channel measurement is a signal in the second signal set, and the first association relationship includes the third indication information, in this embodiment of the present invention, after step 201, the method further includes:
determining, based on the third indication information, whether the signal used by the terminal for channel measurement is in the first signal set; and
adjusting a signal measurement configuration based on a determining result.

Specifically, a specific implementation of the adjusting a signal measurement configuration based on a determining result includes one of the following:
C11: If the signal used by the terminal for channel measurement is in the first signal set (that is, the signal in the second signal set includes the signal used by the terminal for channel measurement, and the signal used by the terminal for channel measurement is determined to be in the first signal set as well based on the third indication information of the target cell, so that the signal used by the terminal for channel measurement exist both in the first signal set and the second signal set, or there is a signal in the first signal set that has a QCL relationship with the signal used by the terminal for channel measurement), determining that the signal used by the terminal for channel measurement is a signal in the first signal set, and signal measurement configuration parameters associated with signals in the first signal set are the same as signal measurement configuration parameters associated with signals in the second signal set.

In this case, to be specific, when a signal before a change is used for channel measurement, when the signal is still included in signals after the change, the terminal directly uses a configuration parameter of the signal before the change for channel measurement.

C12: If the signal used by the terminal for channel measurement is not in the first signal set, (that is, the signal in the second signal set includes the signal used by the terminal for channel measurement, and the signal used by the terminal for channel measurement is determined not to be in the first signal set based on the second indication information and/or the third indication information, so that there is no signal in the first signal set that has a QCL relationship with the signal used by the terminal for channel measurement), skipping detecting, by the terminal after a signal change, signals for channel measurement.

In this case, to be specific, when a signal before a change is used for channel measurement, when the signal is not included in signals after the change, the terminal does not detect the signal.

It should further be noted that, if the signal used by the terminal for channel measurement does not include a signal that has changed, and time and frequency domain resources for a signal after a change do not conflict with time and frequency domain resources for the signal used by the terminal for channel measurement, a channel measurement procedure of the terminal is not impacted; or if the signal used by the terminal for channel measurement does not include a signal that has changed, but time and frequency domain resources for a signal after a change conflict with a resource for the signal used by the terminal for channel measurement, the terminal stops using a signal related to a measurement resource conflict, and in this case of resource conflict, a base station may re-configure time and frequency domain resources for a signal for channel measurement by the terminal.

It should further be noted that, optionally, in a case in which the target cell includes the neighboring cell, a specific implementation of measurement in step 202 is:
measuring, from a preset moment, the neighboring cell using a signal measurement configuration after a change, where
the preset moment includes one of the following:
   D11: a next SMTC period;
   D12: a target moment indicated by the indication information, where
      specifically, the target moment means time information directly carried in the indication information for indicating a time when a signal measurement configuration after a change starts to be used for measuring the neighboring cell;
   D13: a moment when downlink control information (Downlink Control Information, DCI) is activated; and
   D14: a moment when media access control (Media Access Control, MAC) information is activated.

Specifically, D13 and D14 means that a measurement configuration needs to be activated by the first network side device, and the terminal will receive a moment of DCI or MAC information as a moment when measurement starts.

It should further be noted that, if a channel measurement result of the signal in the first signal set needs to be reported to a network device, a configuration parameter of a reporting message is determined based on the third indication information of the target cell. To be specific, the reporting is performed by using a reporting parameter corresponding to the signal that is in the second signal set and that is indicated by the third indication information of the target cell.

Further, it should further be noted that, if the first association relationship includes the first indication information, the terminal performs channel measurement on the signal indicated by the first indication information. A measurement result is reported by using a corresponding reporting message, and the result of measuring the signal indicated by the first indication information and results of measuring the signal in the second signal set and the signal indicated by the third indication information of the target cell are independent from each other and reported separately.

It should be noted that a signal in the neighboring cell is changed is learned from information about a change of the neighboring cell transmitted by a second network side device as the first network side device receives the information, where
the information about the change includes a second association relationship between a first signal set and a second signal set that are of the neighboring cell; and
the first signal set is a set of reference signals and/or synchronization signals after a change in the neighboring cell, and the second signal set is a set of reference signals and/or synchronization signals before the change in the neighboring cell.

Specifically, in a case in which the neighboring cell is a cell of the first network side device, the second network side device is the first network side device; or in a case in which the neighboring cell is not a cell of the first network side device, the second network side device may be another network side device, or the second network side device may be a device at a core network side, and correspondingly, the first network side device obtains information about a signal change in the neighboring cell through an Xn interface/inter-base station interface or an interface of the device at the core network side.

Further, the second association relationship includes at least one of the following:
E11: fourth indication information of the neighboring cell, where the fourth indication information indicates a first signal in the first signal set, and the first signal corresponds to a signal that exists after the neighboring cell is changed and does not exist before the neighboring cell is changed.

It should be noted that the fourth indication information indicates a new signal in the neighboring cell.

Specifically, to make clear specific information about the new signal, the fourth indication information may include at least one of the following:
E111: a transmission period of the first signal;
E112: a CDM mode of the first signal;
E113: a frequency domain resource for the first signal;
E114: a time domain resource for the first signal; and
E115: a configuration parameter of a message for reporting a channel measurement result of the first signal.
E12: fifth indication information of the neighboring cell, where the fifth indication information indicates a second signal in the second signal set, and the second signal corresponds to a signal that exists before the neighboring cell is changed and does not exist after the neighboring cell is changed.

It should be noted that the fifth indication information indicates a signal that is not to be transmitted (that is, a signal that is canceled/disabled). In this case, to reduce signaling overheads of the fifth indication information, the fifth indication information may only indicate identity information, for example, a signal index, of a reduced signal.

E13: sixth indication information of the neighboring cell, where the sixth indication information indicates a third signal in the first signal set and a fourth signal in the second signal set, and the third signal and the fourth signal correspond to signals that exist before and after the neighboring cell is changed.

It should be noted that the sixth indication information indicates a signal that remains unchanged before and after a signal change, to be specific, the sixth indication information indicates a quasi-colocation (QCL) relationship between the fourth signal and the third signal. Specifically, the sixth indication information may only indicate identity information, for example, a signal index, of the signal that remains unchanged.

The specific implementation of this embodiment of the present invention in actual application is described below.

Case 1: An example in which a new beam is generated (that is, there is a new signal) is used, and when there is a new secondary device (for example, an instantly activated panel or LIS node) in a base station in a cell, the secondary device in the base station generates a new beam, and there is a new beam to be measured in a set of beams to be measured. The beam to be measured may be measured based on an SSB or a channel state information reference signal.

Step S11: The base station (that is, the first network side device described above) activates the secondary device in the base station.

A condition of the activation may be:
a. The base station actively activates the secondary device based on how a service goes on (for example, an overall data traffic, a user density, and a block error rate) in a current cell; or
b. A hot-spot user applies to the base station for better coverage or more candidate beams based on a service used by the user and a condition of a channel currently used by the user. The hot-spot user sends an application message to the base station, and the message indicates a service bandwidth requirement or a service feature of the user.

Step S12: The base station configures a new beam detection resource for a user in a cell.

The base station may configure a new beam detection resource for all users in the cell; or the base station configures a new beam detection resource for a part of users (for example, users with a channel not working well) in the cell; or configures a new beam detection resource for a hot-spot user that requires better coverage/more beams.

Specifically, a new beam corresponds to a beam for transmitting an SSB (referred to as an SSB beam for short) or a beam for transmitting a CSI-RS (referred to as a CSI-RS beam for short), and is configured through upper layer signaling.

Optionally, when configuring a new beam, the base station indicates the new beam to be generated by the secondary device/a base station that is not a primary base station. All beams to be measured are divided into several sets, and a principle of the division into sets may be that the beams are divided based on devices that have generated the beams or the beams are divided based on degrees of correlation between the beams.

Optionally, a configuration parameter of the new beam may be an existing configuration parameter (for example, a periodicity or a bandwidth) of a beam resource, and in this way, the base station does not need to specially notify a configuration parameter; or configuration parameters (such as measurement periodicities, offsets of the measurement periodicities, and other parameters) of different beam sets may be different.

Step S13: The terminal measures radio link monitoring (RLM) channel quality of the new beam based on configuration information, and reports a measurement result.

It should be noted that the channel quality may be a layer 1 reference signal received power (L1-RSRP) defined in the fifth generation (5th Generation, 5G) NR (New radio, NR). A manner of reporting may be a manner specified in 5G NR

Optionally, measurement relaxation may be performed in channel measurement of original beams, and an original receiver configuration (for example, a spatial filtering parameter of the receiver) may be selected for use. A previous/recent measurement result is still valid.

Step S14: The base station configures a beam for the terminal based on the measurement result.

Optionally, if the terminal only reports the measurement result of the new beam, the base station performs beam adjustment based on a recent measurement result of the original beam and the measurement result of the new beam.

It should be noted that, if the base station configures at least two beam sets, the base station performs beam adjustment in each beam set.

Case 2: When user distribution in the cell changes, the base station needs to adjust deployment of beams to be measured, disables a part of nodes with a relatively light load, disables a part of beams that are not often used, or replaces/combines several beams with/into one beam.

An application scenario is, for example, that when an environment changes or a cell service changes (for example, in a shopping mall, there is a larger volume of services during the day and a smaller volume of services at night), the base station adjusts a transmitting beam (for example, an SSB beam) in the cell. A possible manner of adjusting includes disabling several transmitting beams in an area offering no services or replacing several transmitting beams with one new transmitting beam.

In this implementation, an example in which a beam to be adjusted is a beam for transmitting an SSB (namely, an SSB beam) is used for description.

Step S21: The base station notifies an SSB beam change to a user in the cell.

The base station transmits indication information to the terminal at a moment T (where the indication information may be transmitted to the terminal by using a notification message), and changes an SSB beam at a moment (T+N) or in a next period of transmitting an SSB. The moment T and the moment (T+N) may be represented by radio frames/subframes/slots in the NR system.

It should be noted that an indication that an SSB beam of the cell is about to change may be carried in the indication information. A manner of indicating may be that information of one bit (bit) is carried in a paging message, or the base station may alternatively obtain the indication that an SSB beam of the cell is about to change through a system information change.

The terminal determines, based on the indication information, a time when the SSB beam is changed. A method for determining the time of change is that the time indicating a change of the SSB beam is shown in the indication information; or the terminal determines, based on the pre-defined parameter in a protocol, after several radio frames/subframes/slots after the notification message is received or when the SSB is transmitted after an SSB periodicity or a few SSB periodicities, that there is an SSB beam change.

The base station notifies the terminal about conditions before and after the SSB beam is changed that include at least one of the following:
a new beam in a new beam set;
a disabled transmitting beam in original beams;
a corresponding QCL relationship between a beam that remains unchanged and a beam in an original beam set; and
the beam that remains unchanged.

Step S22: The user adjusts a beam measurement configuration based on the notification message about the SSB beam change.

It should further be noted that, if a beam used by the terminal for channel measurement does not include an SSB beam, and SSB time and frequency domain resources after a change do not conflict with a beam reference signal resource for channel measurement by the terminal, a channel measurement procedure of the terminal is not impacted; or if a beam used by the terminal for channel measurement does not include an SSB beam, but SSB time and frequency domain resources after a change conflict with a beam reference signal resource for channel measurement by the terminal, the terminal stops using a beam related to a measurement resource conflict, and optionally, the base station re-configures reference signal time and frequency domain resources for channel measurement for the terminal; or if a beam used by the terminal for channel measurement includes an SSB beam, and after an SSB beam change, the SSB beam remains unchanged, the terminal determines, based on the indication information, a QCL relationship before and after the SSB beam is changed.

If the SSB beam used by the terminal for channel measurement has a QCL relationship with an SSB beam after the change, the terminal uses the SSB beam corresponding to the QCL relationship for channel measurement and uses a related parameter (for example, from a layer 1 beam filter (L1 beam filter) or a beam failure indication counter (Beam failure indication counter, BFI_COUNTER)) of an original channel measurement result.

If the SSB beam used by the terminal for channel measurement stops being transmitted after the SSB beam change, so there is no QCL relationship, the terminal stops detecting the SSB beam. Optionally, the base station re-configures reference signal time and frequency domain resources for channel measurement for the terminal.

Case 3: When a beam of the neighboring cell is changed, a beam set of the neighboring cell is changed, and the serving cell notifies a beam change of the neighboring cell, to update a configuration of interference measurement.

Step S31: The base station of the serving cell obtains information about the beam change of the neighboring cell.

The beam may be a beam for transmitting an SSB or a beam for transmitting a CSI-RS. Specifically, the serving cell obtains the information about the beam change of the neighboring cell through an Xn interface/inter-base station interface or a core network.

The information about the beam change of the neighboring cell includes reference signal time and frequency domain resource configuration information that is defined in a protocol, and further includes information about a QCL change between an original beam set and a new beam set. The information about the change includes at least one of the following:
a new beam in a new beam set and a corresponding signal index;
a beam that is disabled or that does not need to be measured any more in an original beam set and a corresponding signal index; and
signal indexes of a beam that remains unchanged or has an unchanged QCL relationship in the original beam set and the new beam set respectively.

It should be noted that the original beam set is a set of reference signals and/or synchronization signals before a beam change; and the new beam set is a set of reference signals and/or synchronization signals after the beam change.

Optionally, the information about the beam change of the neighboring cell may include a time when the beam of the neighboring cell is changed that is represented by a frame serial number or a frame offset relative to a time when the information about the beam change is received.

Step S32: The base station of the serving cell base station updates an RRM parameter for a terminal in the serving cell.

The serving cell notifies the information about the beam change of the neighboring cell that includes at least one of the following:
a new beam in a new beam set and a corresponding signal index;
a transmitting beam that is disabled or that does not need to be measured any more in an original beam set and a corresponding signal index; and
signal indexes of a beam that remains unchanged or has an unchanged QCL relationship in the original beam set and the new beam set respectively.

It should be noted that the information about the beam change may be carried in a paging message.

Further, the information about the beam change of the neighboring cell includes the time when the beam of the neighboring cell is changed, or the base station activates the beam change of the neighboring cell through DCI or MAC signaling.

Step S33: The terminal in the serving cell adjusts, based on the information about the beam change of the neighboring cell, RRM measurement.

The terminal receives the information about the beam change, and uses a new beam configuration to measure the neighboring cell in a next SMTC period, at a time indicated in information about a reference signal change, or after the DCI or MAC information is activated.

In the step of L1 filtering, the terminal measures, on time and frequency domain resources corresponding to a new signal set, signal quality of the beam based on the QCL relationship indicated in the information about the beam change of the neighboring cell, and then performs L1 filtering. In a case in which the information about the change indicates that a signal in an original signal set is disabled, the terminal needs to delete a measurement configuration related to a beam corresponding to this signal.

It should further be noted that, in this embodiment of the present invention, applicable devices may be extended to flexibly deployed devices, such as a newly added L1/L3 relay, a dynamic switching on/off base station, or a panel of a base station. These devices are coverage extension or coverage enhancement for a current cell. No new cell is generated. This manner of deployment may also be used in another system that needs to be based on beam measurement/communication.

It can be learned from the foregoing descriptions that this embodiment of the present invention provides a well-designed signal update solution for a case in which a cell signal is changed. A corresponding QCL relationship between original and new signals is used to improve receiving and measurement efficiency in signal update.

As shown in FIG. 3, an embodiment of the present invention further provides a measurement configuration method, applied to a first network side device. The method includes:
Step 301: transmitting indication information to a terminal, where the indication information is used to indicate a changed signal in a target cell.

The target cell includes a serving cell and/or a neighboring cell, and the changed signal includes at least one of a reference signal and a synchronization signal.

Further, the indication information includes a first association relationship between a first signal set and a second signal set that are of the target cell.

The first signal set is a set of reference signals and/or synchronization signals after a change in the target cell, and the second signal set is a set of reference signals and/or synchronization signals before the change in the target cell.

Specifically, the first association relationship includes at least one of the following:
first indication information of the target cell, where the first indication information indicates a first signal in the first signal set, and the first signal corresponds to a signal that exists after the target cell is changed and does not exist before the target cell is changed;
second indication information of the target cell, where the second indication information indicates a second signal in the second signal set, and the second signal corresponds to a signal that exists before the target cell is changed and does not exist after the target cell is changed; and
third indication information of the target cell, where the third indication information indicates a third signal in the first signal set and a fourth signal in the second signal set, and the third signal and the fourth signal correspond to signals that exist before and after the target cell is changed.

Further, in the case where the first indication information indicates the first signal in the first signal set, the first indication information includes at least one of the following:
a transmission period of the first signal;
a code division multiplexing CDM mode of the first signal;
a frequency domain resource for the first signal;
a time domain resource for the first signal; and
a configuration parameter of a message for reporting a channel measurement result of the first signal.

Optionally, the indication information further includes an indication of a signal change time, and the indication of a signal change time is used by the terminal to determine a time when a signal is changed.

Specifically, the indication information is transmitted through system information or a paging message.

Optionally, in a case in which the target cell includes the neighboring cell, before the transmitting indication information to a terminal, the method further includes:
receiving information about a change of the neighboring cell transmitted by a second network side device, where
the information about the change includes a second association relationship between a first signal set and a second signal set that are of the neighboring cell; and
the first signal set is a set of reference signals and/or synchronization signals after a change in the neighboring cell, and the second signal set is a set of reference signals and/or synchronization signals before the change in the neighboring cell.

Specifically, the second association relationship includes at least one of the following:
fourth indication information of the neighboring cell, where the fourth indication information indicates a first signal in the first signal set, and the first signal corresponds to a signal that exists after the neighboring cell is changed and does not exist before the neighboring cell is changed;
fifth indication information of the neighboring cell, where the fifth indication information indicates a second signal in the second signal set, and the second signal corresponds to a signal that exists before the neighboring cell is changed and does not exist after the neighboring cell is changed; and
sixth indication information of the neighboring cell, where the sixth indication information indicates a third signal in the first signal set and a fourth signal in the second signal set, and the third signal and the fourth signal correspond to signals that exist before and after the neighboring cell is changed.

It should be noted that all descriptions of the first network side device in the foregoing embodiments are applicable to the embodiments of the measurement configuration method, and the same technical effects can be achieved. Details are not provided herein again.

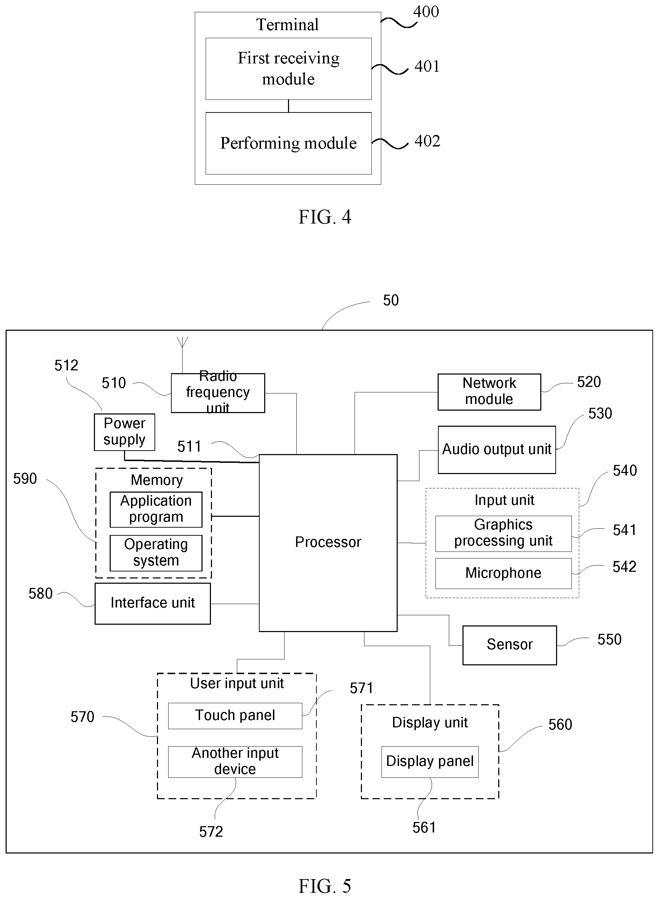

As shown in FIG. 4, an embodiment of the present invention provides a terminal 400, including:
a first receiving module 401, configured to receive indication information transmitted by a first network side device, where the indication information is used to indicate a changed signal in a target cell; and
a performing module 402, configured to perform measurement and/or synchronization based on the changed signal.

The target cell includes a serving cell and/or a neighboring cell, and the changed signal includes at least one of a reference signal and a synchronization signal.

Further, the indication information includes a first association relationship between a first signal set and a second signal set that are of the target cell.

The first signal set is a set of reference signals and/or synchronization signals after a change in the target cell, and the second signal set is a set of reference signals and/or synchronization signals before the change in the target cell.

Specifically, the first association relationship includes at least one of the following:
first indication information of the target cell, where the first indication information indicates a first signal in the first signal set, and the first signal corresponds to a signal that exists after the target cell is changed and does not exist before the target cell is changed;
second indication information of the target cell, where the second indication information indicates a second signal in the second signal set, and the second signal corresponds to a signal that exists before the target cell is changed and does not exist after the target cell is changed; and
third indication information of the target cell, where the third indication information indicates a third signal in the first signal set and a fourth signal in the second signal set, and the third signal and the fourth signal correspond to signals that exist before and after the target cell is changed.

Further, in the case where the first indication information indicates the first signal in the first signal set, the first indication information includes at least one of the following:
a transmission period of the first signal;
a code division multiplexing CDM mode of the first signal;
a frequency domain resource for the first signal;
a time domain resource for the first signal; and
a configuration parameter of a message for reporting a channel measurement result of the first signal.

Optionally, after the indication information transmitted by the first network side device is received by the first receiving module 401, the terminal further includes one of the following:
a first determining module, configured to determine, based on an indication of a signal change time in the indication information, a time when a signal is changed;
a second determining module, configured to determine, based on a first preset parameter, that the time when a signal is changed is after a first preset quantity of radio frames, subframes, or slots after the indication information is received; and
a third determining module, configured to determine, based on a second preset parameter, that the time when a signal is changed is a synchronization signal block period after a second preset quantity.

Optionally, if a signal used by the terminal for channel measurement is a signal in the second signal set, and the first association relationship includes the third indication information, after the indication information transmitted by the first network side device is received by the first receiving module 401, the terminal further includes:
a determining module, configured to determine, based on the third indication information, whether the signal used by the terminal for channel measurement is in the first signal set; and
an adjusting module, configured to adjust a signal measurement configuration based on a determining result.

Further, the adjusting module is configured to implement one of the following:
if the signal used by the terminal for channel measurement is in the first signal set, determining that the signal used by the terminal for channel measurement is a signal in the first signal set, and signal measurement configuration parameters associated with signals in the first signal set are the same as signal measurement configuration parameters associated with signals in the second signal set; or
if the signal used by the terminal for channel measurement is not in the first signal set, skipping detecting, by the terminal, signals in the second signal set.

Optionally, after the indication information transmitted by the first network side device is received by the first receiving module 401, the terminal further includes:
a configuring module, configured to configure, based on the first association relationship, a configuration parameter for signal measurement and status information for signal measurement that are associated with a first target signal to a second target signal, where
the first target signal is a signal in the second signal set, and the second target signal is a signal in the first signal set.

Specifically, the indication information is transmitted through system information or a paging message.

Optionally, in a case in which the target cell includes the neighboring cell, an implementation of the performing module 402 for measurement is:
measuring, from a preset moment, the neighboring cell using a signal measurement configuration after a change, where
the preset moment includes one of the following:
   a next synchronization signal block-based radio resource management measurement timing configuration SMTC period;
   a target moment indicated by the indication information;
   a moment when downlink control information DCI is activated; and
   a moment when media access control MAC information is activated.

It should be noted that this terminal embodiment is a terminal corresponding to the measurement configuration method applied to the terminal. All implementations of the foregoing embodiments are applicable to this terminal embodiment, and the same technical effects can be achieved.

FIG. 5 is a schematic structural diagram of a terminal according to an embodiment of the present invention.

The terminal 50 includes, but is not limited to, components such as a radio frequency unit 510, a network module 520, an audio output unit 530, an input unit 540, a sensor 550, a display unit 560, a user input unit 570, an interface unit 580, a memory 590, a processor 511, and a power supply 512. A person skilled in the art can understand that a structure of the terminal shown in FIG. 5 does not constitute a limitation on the terminal, where the terminal may include more or fewer components than those shown in the figure, or combine some components, or have different component arrangements. In this embodiment of the present invention, the terminal includes, but is not limited to, a mobile phone, a tablet computer, a laptop computer, a palmtop computer, a vehicle-mounted terminal, a wearable device, a pedometer, and the like.

The processor 511 is configured to: receive indication information transmitted by a first network side device, where the indication information is used to indicate a changed signal in a target cell; and perform measurement and/or synchronization based on the changed signal.

The target cell includes a serving cell and/or a neighboring cell, and the changed signal includes at least one of a reference signal and a synchronization signal.

According to the terminal in this embodiment of the present invention, a reference signal and/or synchronization signal after a signal change in the target cell are/is notified to the terminal, so that the terminal can perform a subsequent operation based on the changed signal, and there is no need to re-configure a beam that is to be measured when a beam is changed, thereby improving efficiency of terminal measurement.

It should be understood that in this embodiment of the present invention, the radio frequency unit 510 may be configured to receive and transmit signals in an information receiving and transmitting process or a calling process. Specifically, after receiving downlink data from a network side device, the radio frequency unit 510 transmits the downlink data to the processor 511 for processing, and transmits uplink data to the network side device. Generally, the radio frequency unit 510 includes, but is not limited to, an antenna, at least one amplifier, a transceiver, a coupler, a low noise amplifier, and a duplexer. In addition, the radio frequency unit 510 may communicate with a network and another device through a wireless communication system.

The terminal provides wireless broadband Internet access to a user through the network module 520, for example, helps the user receive and send e-mails, browse web pages, access streaming media, and the like.

The audio output unit 530 may convert audio data received by the radio frequency unit 510 or the network module 520 or stored in the memory 590 into an audio signal and output the audio signal as a sound. In addition, the audio output unit 530 may further provide audio output (for example, a call signal receiving sound or a message receiving sound) related to a specific function performed by the terminal 50. The audio output unit 530 includes a loudspeaker, a buzzer, a telephone receiver, and the like.

The input unit 540 is configured to receive an audio signal or a video signal. The input unit 540 may include a graphics processing unit (Graphics Processing Unit, GPU) 541 and a microphone 542. The graphics processing unit 541 processes image data of a static image or video obtained by an image capture apparatus (for example, a camera) in a video capture mode or an image capture mode. A processed image frame may be displayed on the display unit 560. The image frame processed by the graphics processing unit 541 may be stored in the memory 590 (or another storage medium) or transmitted via the radio frequency unit 510 or the network module 520. The microphone 542 may receive a sound and can process such sound into audio data. The processed audio data may be output by being converted into a format that may be transmitted to a mobile communications network side device by using the radio frequency unit 510 in a telephone call mode.

The terminal 50 further includes at least one sensor 550, for example, a light sensor, a motion sensor, and another sensor. Specifically, the light sensor includes an ambient light sensor and a proximity sensor. The ambient light sensor may adjust luminance of the display panel 561 based on brightness of ambient light. The proximity sensor may turn off the display panel 561 and/or backlight when the terminal 50 is moved to an ear. As a motion sensor, an accelerometer sensor may detect magnitude of accelerations in various directions (usually three axes), may detect magnitude and the direction of gravity when stationary, may be configured to identify postures of the terminal (such as switching between a landscape mode and a portrait mode, related games, and magnetometer posture calibration), may perform functions related to vibration identification (such as a pedometer and a knock), and the like. The sensor 550 may further include a fingerprint sensor, a pressure sensor, an iris sensor, a molecular sensor, a gyroscope, a barometer, a hygrometer, a thermometer, an infrared sensor, or the like. Details are not described herein again.

The display unit 560 is configured to display information input by a user or information provided for a user. The display unit 560 may include a display panel 561, and the display panel 561 may be configured in a form of a liquid crystal display (Liquid Crystal Display, LCD), an organic light-emitting diode (Organic Light-Emitting Diode, OLED), or the like.

The user input unit 570 may be configured to receive input digit or character information and generate key signal input related to user setting and function control of the terminal. Specifically, the user input unit 570 includes a touch panel 571 and another input device 572. The touch panel 571 is also referred to as a touchscreen, and may collect a touch operation performed by a user on or near the touch panel 571 (for example, an operation performed by a user on the touch panel 571 or near the touch panel 571 by using any proper object or accessory, for example, a finger or a stylus). The touch panel 571 may include two parts: a touch detection apparatus and a touch controller. The touch detection apparatus detects a touch location of a user, detects a signal brought by a touch operation, and transmits the signal to the touch controller. The touch controller receives touch information from the touch detection apparatus, converts the touch information into contact coordinates, transmits the contact coordinates to the processor 511, and receives and executes a command from the processor 511. In addition, the touch panel 571 may be implemented in various types such as a resistor, a capacitor, an infrared ray, or a surface acoustic wave. The user input unit 570 may include other input devices 572 in addition to the touch panel 571. Specifically, the another input device 572 may include, but is not limited to, a physical keyboard, a function key (for example, a volume control key or a switch key), a trackball, a mouse, and a joystick. Details are not described herein.

Further, the touch panel 571 may cover the display panel 561. When detecting a touch operation on or near the touch panel 571, the touch panel 571 transmits the touch operation to the processor 511 to determine a type of a touch event. Then, the processor 511 provides corresponding visual output on the display panel 561 based on the type of the touch event. In FIG. 5, the touch panel 571 and the display panel 561 are used as two independent components to implement input and output functions of the terminal. However, in some embodiments, the touch panel 571 and the display panel 561 may be integrated to implement the input and output functions of the terminal. This is not specifically limited herein.

The interface unit 580 is an interface connecting an external apparatus to the terminal 50. For example, the external apparatus may include a wired or wireless headset port, an external power supply (or battery charger) port, a wired or wireless data port, a storage card port, a port configured to connect to an apparatus having an identification module, an audio input/output (I/O) port, a video I/O port, a headset port, and the like. The interface unit 580 may be configured to receive input (for example, data information and power) from the external apparatus and transmit the received input to one or more elements in the terminal 50, or may be configured to transmit data between the terminal 50 and the external apparatus.

The memory 590 may be configured to store a software program and various data. The memory 590 may mainly include a program storage area and a data storage area. The program storage area may store an operating system, an application required by at least one function (for example, a sound play function or an image display function), and the like. The data storage area may store data (for example, audio data or an address book) or the like created based on use of a mobile phone. In addition, the memory 590 may include a high-speed random access memory, and may further include a nonvolatile memory, for example, at least one magnetic disk storage device, a flash storage device, or another volatile solid-state storage device.

The processor 511 is a control center of the terminal, and connects all parts of the entire terminal by using various interfaces and lines. By running or executing a software program and/or a module stored in the memory 590 and invoking data stored in the memory 590, the processor performs various functions of the terminal and data processing, to perform overall monitoring on the terminal. The processor 511 may include one or more processing units. Preferentially, the processor 511 may be integrated with an application processor and a modem processor. The application processor mainly processes an operating system, a user interface, an application program, and the like, and the modem processor mainly processes wireless communication. It can be understood that, alternatively, the modem processor may not be integrated into the processor 511.

The terminal 50 may further include a power supply 512 (such as a battery) that supplies power to each component. Preferentially, the power supply 512 may be logically connected to the processor 511 by using a power management system, to implement functions such as charging, discharging, and power consumption management by using the power management system.

In addition, the terminal 50 includes some functional modules not shown, and details are not described herein.

Preferably, an embodiment of the present invention further provides a terminal, including a processor 511, a memory 590, and a computer program stored in the memory 590 and executable on the processor 511. When the computer program is executed by the processor 511, each process in the embodiment of the measurement configuration method applied to a terminal side is implemented, and the same technical effects can be achieved. To avoid repetition, details are not described herein.

An embodiment of the present invention further provides a computer-readable storage medium. The computer-readable storage medium stores a computer program. When the computer program is executed by a processor, each process in the embodiment of the measurement configuration method applied to the terminal side is implemented, and the same technical effects can be achieved. To avoid repetition, details are not described herein again. The computer-readable storage medium may be, for example, a read-only memory (Read-Only Memory, ROM), a random access memory (Random Access Memory, RAM), a magnetic disk, an optical disc.

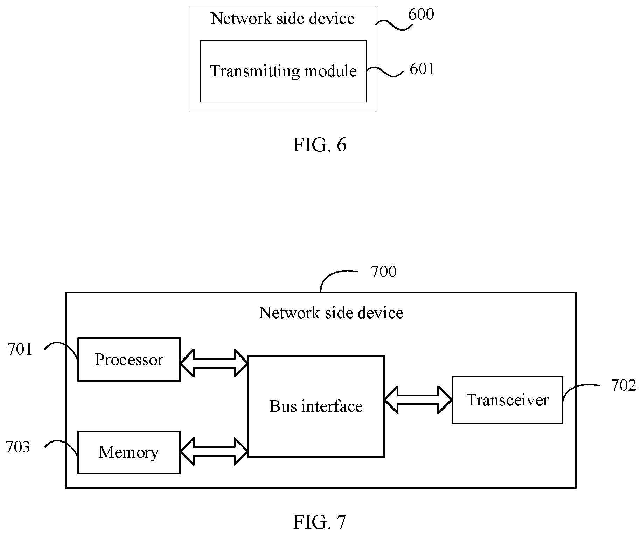

As shown in FIG. 6, the embodiments of the present invention further provide a network side device 600. The network side device is a first network side device, and includes:
a transmitting module 601, configured to transmit indication information to a terminal, where the indication information is used to indicate a changed signal in a target cell, where
the target cell includes a serving cell and/or a neighboring cell, and the changed signal includes at least one of a reference signal and a synchronization signal.

Further, the indication information includes a first association relationship between a first signal set and a second signal set that are of the target cell.

The first signal set is a set of reference signals and/or synchronization signals after a change in the target cell, and the second signal set is a set of reference signals and/or synchronization signals before the change in the target cell.

Specifically, the first association relationship includes at least one of the following:
first indication information of the target cell, where the first indication information indicates a first signal in the first signal set, and the first signal corresponds to a signal that exists after the target cell is changed and does not exist before the target cell is changed;
second indication information of the target cell, where the second indication information indicates a second signal in the second signal set, and the second signal corresponds to a signal that exists before the target cell is changed and does not exist after the target cell is changed; and
third indication information of the target cell, where the third indication information indicates a third signal in the first signal set and a fourth signal in the second signal set, and the third signal and the fourth signal correspond to signals that exist before and after the target cell is changed.

Further, in the case where the first indication information indicates the first signal in the first signal set, the first indication information includes at least one of the following:
a transmission period of the first signal;
a code division multiplexing CDM mode of the first signal;
a frequency domain resource for the first signal;
a time domain resource for the first signal; and
a configuration parameter of a message for reporting a channel measurement result of the first signal.

Optionally, the indication information further includes an indication of a signal change time, and the indication of a signal change time is used by the terminal to determine a time when a signal is changed.

Specifically, the indication information is transmitted through system information or a paging message.

Optionally, in a case in which the target cell includes the neighboring cell, before the indication information is transmitted by the transmitting module 601 to the terminal, the network side device further includes:
a second receiving module, configured to receive information about a change of the neighboring cell transmitted by a second network side device, where
the information about the change includes a second association relationship between a first signal set and a second signal set that are of the neighboring cell; and
the first signal set is a set of reference signals and/or synchronization signals after a change in the neighboring cell, and the second signal set is a set of reference signals and/or synchronization signals before the change in the neighboring cell.

Specifically, the second association relationship includes at least one of the following:
fourth indication information of the neighboring cell, where the fourth indication information indicates a first signal in the first signal set, and the first signal corresponds to a signal that exists after the neighboring cell is changed and does not exist before the neighboring cell is changed;
fifth indication information of the neighboring cell, where the fifth indication information indicates a second signal in the second signal set, and the second signal corresponds to a signal that exists before the neighboring cell is changed and does not exist after the neighboring cell is changed; and
sixth indication information of the neighboring cell, where the sixth indication information indicates a third signal in the first signal set and a fourth signal in the second signal set, and the third signal and the fourth signal correspond to signals that exist before and after the neighboring cell is changed.

An embodiment of the present invention further provides a network side device. The network side device is a first network side device, and includes a memory, a processor, and a computer program stored in the memory and executable on the processor. When the computer program is executed by the processor, each process in the embodiment of the measurement configuration method applied to the first network side device is implemented, and the same technical effects can be achieved. To avoid repetition, details are not described herein.

An embodiment of the present invention further provides a computer-readable storage medium. The computer-readable storage medium stores a computer program. When the computer program is executed by a processor, each process in the embodiment of the measurement configuration method applied to the first network side device is implemented, and the same technical effects can be achieved. To avoid repetition, details are not described herein. The computer-readable storage medium is, for example, a read-only memory (Read-Only Memory, ROM), a random access memory (Random Access Memory, RAM), a magnetic disk, or an optical disc.

FIG. 7 is a structural diagram of a network side device according to an embodiment of the present invention. Details of the foregoing measurement configuration method can be implemented, and the same effects can be achieved. As shown in FIG. 7, a network side device 700 includes a processor 701, a transceiver 702, a memory 703, and a bus interface.

The processor 701 is configured to read a program in the memory 703 and perform the following process:
transmitting indication information to a terminal by using the transceiver 702, where the indication information is used to indicate a changed signal in a target cell, where
the target cell includes a serving cell and/or a neighboring cell, and the changed signal includes at least one of a reference signal and a synchronization signal.

Further, the indication information includes a first association relationship between a first signal set and a second signal set that are of the target cell.

The first signal set is a set of reference signals and/or synchronization signals after a change in the target cell, and the second signal set is a set of reference signals and/or synchronization signals before the change in the target cell.

In FIG. 7, a bus architecture may include any quantity of interconnected buses and bridges, and is specifically linked by various circuits of one or more processors represented by the processor 701 and a memory represented by the memory 703. The bus architecture may further link various other circuits such as a peripheral device, a voltage regulator, and a power management circuit together. These are all well-known in the art, and therefore are not further described in this specification. The bus interface provides interfaces. The transceiver 702 may be a plurality of elements, in other words, includes a transmitter and a receiver, and provides a unit configured to communicate with various other apparatuses on a transmission medium.

Specifically, the first association relationship includes at least one of the following:
first indication information of the target cell, where the first indication information indicates a first signal in the first signal set, and the first signal corresponds to a signal that exists after the target cell is changed and does not exist before the target cell is changed;
second indication information of the target cell, where the second indication information indicates a second signal in the second signal set, and the second signal corresponds to a signal that exists before the target cell is changed and does not exist after the target cell is changed; and
third indication information of the target cell, where the third indication information indicates a third signal in the first signal set and a fourth signal in the second signal set, and the third signal and the fourth signal correspond to signals that exist before and after the target cell is changed.

Further, in the case where the first indication information indicates the first signal in the first signal set, the first indication information includes at least one of the following:
a transmission period of the first signal;
a code division multiplexing CDM mode of the first signal;
a frequency domain resource for the first signal;
a time domain resource for the first signal; and
a configuration parameter of a message for reporting a channel measurement result of the first signal.

Optionally, the indication information further includes an indication of a signal change time, and the indication of a signal change time is used by the terminal to determine a time when a signal is changed.

Specifically, the indication information is transmitted through system information or a paging message.

Optionally, in a case in which the target cell includes the neighboring cell, before the indication information is transmitted by the transceiver 702 to the terminal, the processor 701 is configured to invoke a program in the memory 703, and perform the following procedure:

The transceiver 702 receives information about a change of the neighboring cell transmitted by a second network side device, where
the information about the change includes a second association relationship between a first signal set and a second signal set that are of the neighboring cell; and
the first signal set is a set of reference signals and/or synchronization signals after a change in the neighboring cell, and the second signal set is a set of reference signals and/or synchronization signals before the change in the neighboring cell.

Further, the second association relationship includes at least one of the following:
fourth indication information of the neighboring cell, where the fourth indication information indicates a first signal in the first signal set, and the first signal corresponds to a signal that exists after the neighboring cell is changed and does not exist before the neighboring cell is changed;
fifth indication information of the neighboring cell, where the fifth indication information indicates a second signal in the second signal set, and the second signal corresponds to a signal that exists before the neighboring cell is changed and does not exist after the neighboring cell is changed; and
sixth indication information of the neighboring cell, where the sixth indication information indicates a third signal in the first signal set and a fourth signal in the second signal set, and the third signal and the fourth signal correspond to signals that exist before and after the neighboring cell is changed.

The network side device may be a base transceiver station (Base Transceiver Station, BTS) in a global system for mobile communications (Global System for Mobile communication, GSM) or code division multiple access (Code Division Multiple Access, CDMA), or may be a NodeB (NodeB, NB) in wideband code division multiple access (Wideband Code Division Multiple Access, WCDMA), or may be an evolved Node B (Evolved Node B, eNB or eNodeB) or a relay station or an access point in LTE, or a base station in a future 5G network, or the like, which is not limited herein.

It can be understood that the embodiments described in the present disclosure may be implemented by hardware, software, firmware, middleware, microcode, or a combination thereof. For implementation with hardware, a module, unit, submodule, subunit, and the like may be implemented in one or more application specific integrated circuits (Application Specific Integrated Circuit, ASIC), a digital signal processor (Digital Signal Processor, DSP), a digital signal processor device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, another electronic unit for implementing the functions of this application, or a combination thereof.

The foregoing embodiments are preferred embodiments of the present invention. It should be noted that, within the technical concept of the present invention, a person of ordinary skill in the art can make various improvements and modifications, which shall all fall within the protection scope of the present invention.

## Claims

1. A measurement configuration method, applied to a terminal and comprising:
receiving indication information transmitted by a first network side device, wherein the indication information is used to indicate a changed signal in a target cell; and
performing measurement and/or synchronization based on the changed signal; wherein
the target cell comprises a serving cell and/or a neighboring cell, and the changed signal comprises at least one of a reference signal and a synchronization signal.

2. The measurement configuration method according to claim 1, wherein the indication information comprises a first association relationship between a first signal set and a second signal set that are of the target cell; and
the first signal set is a set of reference signals and/or synchronization signals after a change in the target cell, and the second signal set is a set of reference signals and/or synchronization signals before the change in the target cell.

3. The measurement configuration method according to claim 2, wherein the first association relationship comprises at least one of following:
first indication information of the target cell, wherein the first indication information indicates a first signal in the first signal set, and the first signal corresponds to a signal that exists after the target cell is changed and does not exist before the target cell is changed;
second indication information of the target cell, wherein the second indication information indicates a second signal in the second signal set, and the second signal corresponds to a signal that exists before the target cell is changed and does not exist after the target cell is changed; and
third indication information of the target cell, wherein the third indication information indicates a third signal in the first signal set and a fourth signal in the second signal set, and the third signal and the fourth signal correspond to signals that exist before and after the target cell is changed.

4. The measurement configuration method according to claim 3, wherein in a case where the first indication information indicates the first signal in the first signal set, the first indication information comprises at least one of following:
a transmission period of the first signal;
a code division multiplexing CDM mode of the first signal;
a frequency domain resource for the first signal;
a time domain resource for the first signal; and
a configuration parameter of a message for reporting a channel measurement result of the first signal.

5. The measurement configuration method according to claim 1, wherein after the receiving indication information transmitted by a first network side device, the method further comprises one of following:
determining, based on an indication of a signal change time in the indication information, a time when a signal is changed;
determining, based on a first preset parameter, that the time when a signal is changed is after a first preset quantity of radio frames, subframes, or slots after the indication information is received; and
determining, based on a second preset parameter, that the time when a signal is changed is a synchronization signal block period after a second preset quantity.

6. The measurement configuration method according to claim 2, wherein if a signal used by the terminal for channel measurement is a signal in the second signal set, and the first association relationship comprises the third indication information, after the receiving indication information transmitted by a first network side device, the method further comprises:
determining, based on the third indication information, whether the signal used by the terminal for channel measurement is in the first signal set; and
adjusting a signal measurement configuration based on a determining result.

7. The measurement configuration method according to claim 6, wherein the adjusting a signal measurement configuration based on a determining result comprises one of following:
if the signal used by the terminal for channel measurement is in the first signal set, determining that the signal used by the terminal for channel measurement is a signal in the first signal set, and signal measurement configuration parameters associated with signals in the first signal set are same as signal measurement configuration parameters associated with signals in the second signal set; or
if the signal used by the terminal for channel measurement is not in the first signal set, skipping detecting, by the terminal, signals in the second signal set.

8. The measurement configuration method according to claim 2, wherein after the receiving indication information transmitted by a first network side device, the method further comprises:
configuring, based on the first association relationship, a configuration parameter for signal measurement and status information for signal measurement that are associated with a first target signal to a second target signal; wherein
the first target signal is a signal in the second signal set, and the second target signal is a signal in the first signal set.

9. The measurement configuration method according to claim 1, wherein the indication information is transmitted through system information or a paging message.

10. The measurement configuration method according to claim 1, wherein in a case in which the target cell comprises a neighboring cell, the performing measurement comprises:
measuring, from a preset moment, the neighboring cell using a signal measurement configuration after a change; wherein
the preset moment comprises one of following:
a next synchronization signal block-based radio resource management measurement timing configuration SMTC period;
a target moment indicated by the indication information;
a moment when downlink control information DCI is activated; and
a moment when media access control MAC information is activated.

11. A measurement configuration method, applied to a first network side device and comprising:
transmitting indication information to a terminal, wherein the indication information is used to indicate a changed signal in a target cell; wherein
the target cell comprises a serving cell and/or a neighboring cell, and the changed signal comprises at least one of a reference signal and a synchronization signal.

12. The measurement configuration method according to claim 11, wherein the indication information comprises a first association relationship between a first signal set and a second signal set that are of the target cell; and
the first signal set is a set of reference signals and/or synchronization signals after a change in the target cell, and the second signal set is a set of reference signals and/or synchronization signals before the change in the target cell.

13. The measurement configuration method according to claim 12, wherein the first association relationship comprises at least one of following:
first indication information of the target cell, wherein the first indication information indicates a first signal in the first signal set, and the first signal corresponds to a signal that exists after the target cell is changed and does not exist before the target cell is changed;
second indication information of the target cell, wherein the second indication information indicates a second signal in the second signal set, and the second signal corresponds to a signal that exists before the target cell is changed and does not exist after the target cell is changed; and
third indication information of the target cell, wherein the third indication information indicates a third signal in the first signal set and a fourth signal in the second signal set, and the third signal and the fourth signal correspond to signals that exist before and after the target cell is changed.

14. The measurement configuration method according to claim 13, wherein in a case where the first indication information indicates the first signal in the first signal set, the first indication information comprises at least one of following:
a transmission period of the first signal;
a code division multiplexing CDM mode of the first signal;
a frequency domain resource for the first signal;
a time domain resource for the first signal; and
a configuration parameter of a message for reporting a channel measurement result of the first signal.

15. The measurement configuration method according to claim 11, wherein the indication information further comprises an indication of a signal change time, and the indication of a signal change time is used by the terminal to determine a time when a signal is changed.

16. The measurement configuration method according to claim 11, wherein the indication information is transmitted through system information or a paging message.

17. The measurement configuration method according to claim 11, wherein in a case in which the target cell comprises a neighboring cell, before the transmitting indication information to a terminal, the method further comprises:
receiving information about a change of the neighboring cell transmitted by a second network side device; wherein
the information about the change comprises a second association relationship between a first signal set and a second signal set that are of the neighboring cell; and
the first signal set is a set of reference signals and/or synchronization signals after a change in the neighboring cell, and the second signal set is a set of reference signals and/or synchronization signals before the change in the neighboring cell.

18. The measurement configuration method according to claim 17, wherein the second association relationship comprises at least one of following:
fourth indication information of the neighboring cell, wherein the fourth indication information indicates a first signal in the first signal set, and the first signal corresponds to a signal that exists after the neighboring cell is changed and does not exist before the neighboring cell is changed;
fifth indication information of the neighboring cell, wherein the fifth indication information indicates a second signal in the second signal set, and the second signal corresponds to a signal that exists before the neighboring cell is changed and does not exist after the neighboring cell is changed; and
sixth indication information of the neighboring cell, wherein the sixth indication information indicates a third signal in the first signal set and a fourth signal in the second signal set, and the third signal and the fourth signal correspond to signals that exist before and after the neighboring cell is changed.

19. A terminal, comprising:
a first receiving module, configured to receive indication information transmitted by a first network side device, wherein the indication information is used to indicate a changed signal in a target cell; and
a performing module, configured to perform measurement and/or synchronization based on the changed signal; wherein
the target cell comprises a serving cell and/or a neighboring cell, and the changed signal comprises at least one of a reference signal and a synchronization signal.

20. The terminal according to claim 19, wherein the indication information comprises a first association relationship between a first signal set and a second signal set that are of the target cell; and
the first signal set is a set of reference signals and/or synchronization signals after a change in the target cell, and the second signal set is a set of reference signals and/or synchronization signals before the change in the target cell.

21. The terminal according to claim 20, wherein the first association relationship comprises at least one of following:
first indication information of the target cell, wherein the first indication information indicates a first signal in the first signal set, and the first signal corresponds to a signal that exists after the target cell is changed and does not exist before the target cell is changed;
second indication information of the target cell, wherein the second indication information indicates a second signal in the second signal set, and the second signal corresponds to a signal that exists before the target cell is changed and does not exist after the target cell is changed; and
third indication information of the target cell, wherein the third indication information indicates a third signal in the first signal set and a fourth signal in the second signal set, and the third signal and the fourth signal correspond to signals that exist before and after the target cell is changed.

22. The terminal according to claim 21, wherein in a case where the first indication information indicates the first signal in the first signal set, the first indication information comprises at least one of following:
a transmission period of the first signal;
a code division multiplexing CDM mode of the first signal;
a frequency domain resource for the first signal;
a time domain resource for the first signal; and
a configuration parameter of a message for reporting a channel measurement result of the first signal.

23. The terminal according to claim 19, wherein after the indication information transmitted by the first network side device is received by the first receiving module, the terminal further comprises one of following:
a first determining module, configured to determine, based on an indication of a signal change time in the indication information, a time when a signal is changed;
a second determining module, configured to determine, based on a first preset parameter, that the time when a signal is changed is after a first preset quantity of radio frames, subframes, or slots after the indication information is received; and
a third determining module, configured to determine, based on a second preset parameter, that the time when a signal is changed is a synchronization signal block period after a second preset quantity.

24. The terminal according to claim 19, wherein if a signal used by the terminal for channel measurement is a signal in the second signal set, and the first association relationship comprises the third indication information, after the indication information transmitted by the first network side device is received by the first receiving module, the terminal further comprises:
a determining module, configured to determine, based on the third indication information, whether the signal used by the terminal for channel measurement is in the first signal set; and
an adjusting module, configured to adjust a signal measurement configuration based on a determining result.

25. The terminal according to claim 24, wherein the adjusting module is configured to implement one of following:
if the signal used by the terminal for channel measurement is in the first signal set, determining that the signal used by the terminal for channel measurement is a signal in the first signal set, and signal measurement configuration parameters associated with signals in the first signal set are same as signal measurement configuration parameters associated with signals in the second signal set; or
if the signal used by the terminal for channel measurement is not in the first signal set, skipping detecting, by the terminal, signals in the second signal set.

26. The terminal according to claim 20, wherein after the indication information transmitted by the first network side device is received by the first receiving module, the terminal further comprises:
a configuring module, configured to configure, based on the first association relationship, a configuration parameter for signal measurement and status information for signal measurement that are associated with a first target signal to a second target signal; wherein
the first target signal is a signal in the second signal set, and the second target signal is a signal in the first signal set.

27. The terminal according to claim 19, wherein the indication information is transmitted through system information or a paging message.

28. The terminal according to claim 19, wherein in a case in which the target cell comprises a neighboring cell, an implementation of the performing module for measurement is:
measuring, from a preset moment, the neighboring cell using a signal measurement configuration after a change; wherein
the preset moment comprises one of following:
a next synchronization signal block-based radio resource management measurement timing configuration SMTC period;
a target moment indicated by the indication information;
a moment when downlink control information DCI is activated; and
a moment when media access control MAC information is activated.

29. A terminal, comprising a memory, a processor, and a computer program stored in the memory and executable on the processor, wherein when the computer program is executed by the processor, steps of the measurement configuration method according to any one of claims 1 to 10 are implemented.

30. A network side device, wherein the network side device is a first network side device, and comprises:
a transmitting module, configured to transmit indication information to a terminal, wherein the indication information is used to indicate a changed signal in a target cell; wherein
the target cell comprises a serving cell and/or a neighboring cell, and the changed signal comprises at least one of a reference signal and a synchronization signal.

31. The network side device according to claim 30, wherein the indication information comprises a first association relationship between a first signal set and a second signal set that are of the target cell; and
the first signal set is a set of reference signals and/or synchronization signals after a change in the target cell, and the second signal set is a set of reference signals and/or synchronization signals before the change in the target cell.

32. The network side device according to claim 31, wherein the first association relationship comprises at least one of following:
first indication information of the target cell, wherein the first indication information indicates a first signal in the first signal set, and the first signal corresponds to a signal that exists after the target cell is changed and does not exist before the target cell is changed;
second indication information of the target cell, wherein the second indication information indicates a second signal in the second signal set, and the second signal corresponds to a signal that exists before the target cell is changed and does not exist after the target cell is changed; and
third indication information of the target cell, wherein the third indication information indicates a third signal in the first signal set and a fourth signal in the second signal set, and the third signal and the fourth signal correspond to signals that exist before and after the target cell is changed.

33. The network side device according to claim 32, wherein in a case where the first indication information indicates the first signal in the first signal set, the first indication information comprises at least one of following:
a transmission period of the first signal;
a code division multiplexing CDM mode of the first signal;
a frequency domain resource for the first signal;
a time domain resource for the first signal; and
a configuration parameter of a message for reporting a channel measurement result of the first signal.

34. The network side device according to claim 30, wherein the indication information further comprises an indication of a signal change time, and the indication of a signal change time is used by the terminal to determine a time when a signal is changed.

35. The network side device according to claim 30, wherein the indication information is transmitted through system information or a paging message.

36. The network side device according to claim 30, wherein in a case in which the target cell comprises a neighboring cell, before the indication information is transmitted by the transmitting module to the terminal, the network side device further comprises:
a second receiving module, configured to receive information about a change of the neighboring cell transmitted by a second network side device; wherein
the information about the change comprises a second association relationship between a first signal set and a second signal set that are of the neighboring cell; and
the first signal set is a set of reference signals and/or synchronization signals after a change in the neighboring cell, and the second signal set is a set of reference signals and/or synchronization signals before the change in the neighboring cell.

37. The network side device according to claim 36, wherein the second association relationship comprises at least one of following:
fourth indication information of the neighboring cell, wherein the fourth indication information indicates a first signal in the first signal set, and the first signal corresponds to a signal that exists after the neighboring cell is changed and does not exist before the neighboring cell is changed;
fifth indication information of the neighboring cell, wherein the fifth indication information indicates a second signal in the second signal set, and the second signal corresponds to a signal that exists before the neighboring cell is changed and does not exist after the neighboring cell is changed; and
sixth indication information of the neighboring cell, wherein the sixth indication information indicates a third signal in the first signal set and a fourth signal in the second signal set, and the third signal and the fourth signal correspond to signals that exist before and after the neighboring cell is changed.

38. A network side device, wherein the network side device is a first network side device, and comprises a memory, a processor, and a computer program stored in the memory and executable on the processor, wherein when the computer program is executed by the processor, steps of the measurement configuration method according to any one of claims 11 to 18 are implemented.

39. A computer-readable storage medium, wherein the computer-readable storage medium stores a computer program, and when the computer program is executed by a processor, steps of the measurement configuration method according to any one of claims 1 to 18 are implemented.

40. A computer program product, wherein the computer program product is executed by at least one processor to perform the measurement configuration method according to any one of claims 1 to 18.

41. A terminal, configured to perform steps of the measurement configuration method according to any one of claims 1 to 10.

42. A network side device, configured to perform steps of the measurement configuration method according to any one of claims 11 to 18.
